# EUROPEAN PATENT SPECIFICATION

(11) **EP 0 699 548 B1**
(45) Date of publication and mention of the grant of the patent: **06.05.1998**
(21) Application number: 95306069.6
(22) Date of filing: 31.08.1995
(51) Int. Cl.: B60J 1/17, B60J 10/04, B60J 5/04, F16B 17/00

(54) **Glass run assembly and mounting structure including processing method for attachment therebetween**
Scheibenführung und Montageanordnung einschliesslich Verbindungsweise
Guidage de vitre et structure de montage y compris méthode de connection

(30) Priority: 31.08.1994 JP 206879/94
(43) Date of publication of application: 06.03.1996
(73) Proprietor: Kinugawa Rubber Industrial Co., Ltd.,, Chiba-shi, Chiba 263 (JP)
(72) Inventor: Takamiya, Takeomi, c/o Kinugawa Rubber Ind. Co,Ltd, Chiba-shi, Chiba 263 (JP)
(74) Representative: Godwin, Edgar James

(56) References cited:
- FR-A- 2 691 760
- FR-A- 2 692 527
- US-A- 5 305 517
- PATENT ABSTRACTS OF JAPAN vol. 17 no. 483 (M-1472) ,2 September 1993 & JP-A-05 116534 (KINUGAWA RUBBER IND. CO. LTD.) 14 May 1993,

## Description

The present invention relates to an installation arrangement for a glass run arranged to receive an edge of a window disposed in an openable and closable fashion, and a bracket for mounting such a glass run. Specifically, the present invention is drawn to installation of a glass run and mounting bracket therefor such as utilized in a vehicular doorframe, or the like, of an automotive vehicle.

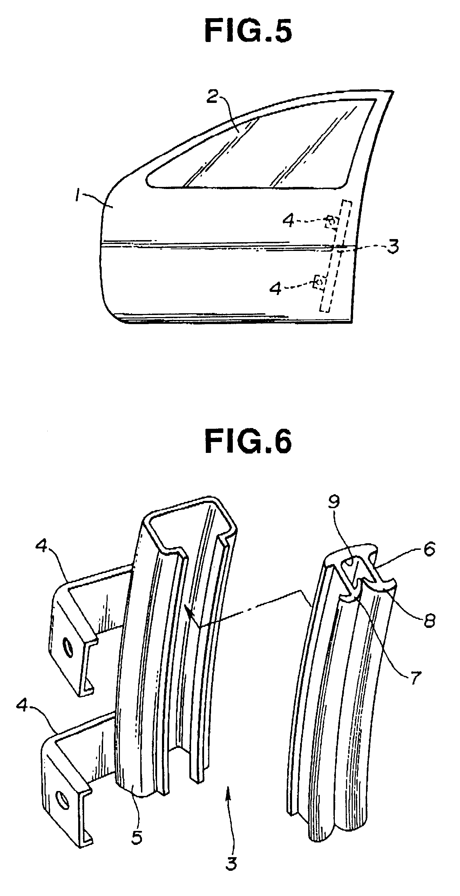

Referring to Figs. 5 and 6, generally, in manufacture of automotive vehicles, and the like, a glass run assembly 3 for receiving a sliding edge portion of a window panel 2 is mounted on a frame member of a vehicular door 1 via a mounting bracket 4.

As may be seen in Fig. 6, such a glass run assembly 3 generally comprises a substantially C-shaped glass run channel 5, formed of metal, for receiving a C-shaped glass run 6, formed of rubber, synthetic resin, or other suitably resilient material. An open side of such a C-shaped glass run 6 includes opposed first and second seal lips 7 and 8 between which an edge portion of the window panel 2 may be received. Such a conventional glass run 6 further includes a channel base 9 disposed along the glass run channel 5. According to this structure, an edge portion of the window panel 2 received in the glass run 6 may be suitably sealed along the channel base 9, between the first and second seal lips 7 and 8.

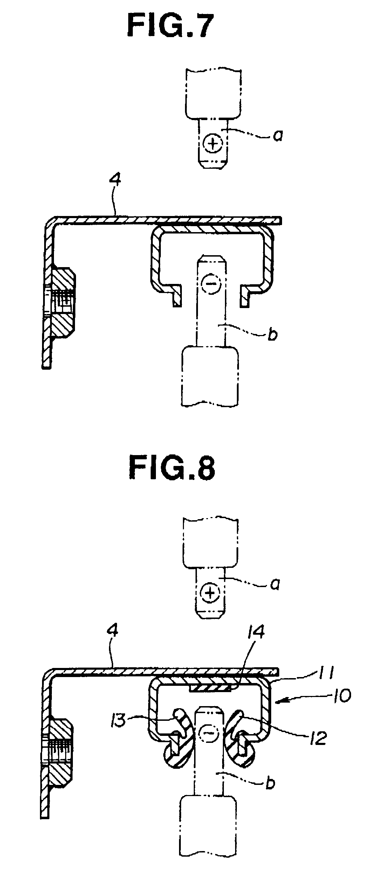

Referring now to Fig. 7, a procedure for installing such a glass run assembly 3 on a door frame (not shown) of an automotive vehicle will be explained herein below.

The mounting bracket 4 is generally attached to the glass run channel 5 via spot welding technique. In Fig. 7, positive and negative electrodes a and b of a welding apparatus are positioned such that a portion of the bracket 4 and a bottom portion of the glass run channel 5 are interposed therebetween at a welding position for joining the bracket 4 to the glass run channel 5 via spot welding.

In addition, referring to Fig. 8 another, type of glass run assembly 10 is known in which a curvature of the glass run 6 and a shaped channel 11 are formed to be the same. That is, a shaped metal glass run channel 11 is shaped according to the particular design of the window panel 2, glass run requirements, etc., by bending processing, or the like, for installation on a portion of the vehicle door 1. One such alternative type of glass run assembly 10 has been disclosed, for example, in Japanese Patent Application First Publication (unexamined) 5 - 116534 (JP-A-5-116534).

Referring now to Fig. 8, according to this structure, a resilient glass run portion of the assembly 10 is comprised of separate members. That is, first and second seal lip members 12, 13 are respectively attached to first and second opposed edges of the curved, substantially C-shaped channel 11 and a resilient, electrically non-conductive edge seal member 14 is disposed along an elongate bottom surface of the channel 11.

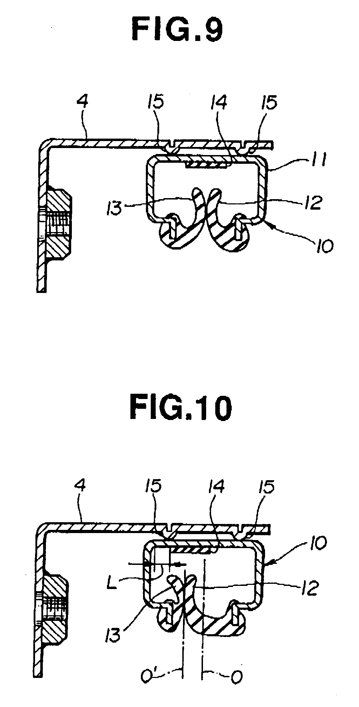

However, according to the above described structure, suitable attachment between the channel 11 and a mounting bracket 4, such as shown in Fig. 8, by spot welding processing as carried out for attachment of the previously described glass run assembly 3, is difficult, and damage to the glass run members may result. Thus, between the channel 11 and the bracket 4 is effected by projection welding technique. As may be seen in Fig. 9, a bracket 4 utilized for mounting such a glass run assembly 10 is provided with a pair of projecting members 15, 15 which are formed in parallel to contact an underside of the channel 11 at positions corresponding to a bottom surface of the channel 11, on both sides of where the edge seal 14 is disposed.

Further, to conform with recent automotive design trends for streamlining a vehicular body for reducing a running resistance thereof, window panels are often disposed at an angle in accordance with the body design of the vehicle. According to this, as seen in Fig. 10, a sealing axis 0' of the glass run assembly 10 is offset from the median axis O of the channel 11. Thus, the configuration of the first and second seal lips 12, 13 as well as the positioning of the edge seal 14 along the bottom of the channel 11 are conformed to the desired offset.

However, as may be seen in Fig. 10, in such an offset glass run 10 in which a single edge seal member 14 is disposed longitudinally along a bottom surface of a glass run channel 11, even according to projection welding technique, a space L available for effecting attachment between at least one of the projecting members 15 is excessively small, complicating processing for securely attaching the channel 11 to the mounting bracket 14. According to such a small available space L, a likelihood of damage to the edge seal member 14 according to heat generated during welding is high. However, secure attachment of the channel 11 to the bracket 4 must be assured for proper operation and reliability of the glass run channel and associated structure. Due to space considerations, optimum compactness for such an assembly is sought, for this reason, overcoming the above problem by enlargement of a width of the glass run channel 11 is not desirable.

Thus, it has been required to provide a mounting structure for a glass run assembly in which a single seal member is disposed on a bottom surface of a glass run channel 11 along a predetermined offset sealing axis for sealingly receiving an edge portion of a vehicular window panel 2 which is mounted so as to be movable along a plane angularly offset from a plane of a longitudinal center axis of the glass run channel 11.

Thus, it is an object of the present invention to overcome the drawbacks of the related art.

It is a further object of the invention to provide a compact glass run and mounting structure therefor, which may be easily attached during manufacture and installation with out incurring damage to component parts thereof.
JP-A-5-116534 discloses a mounting structure according to the preamble of claim 1.

The present invention provides a mounting structure for a glass run assembly, as set forth in claim 1. Further developments in line with claim 1 are referred to in the dependent claims 2 to 4.

### Brief Description of the Drawings

Fig. 1 is a cross-sectional view according to a preferred embodiment of the invention;
Fig. 2 shows a perspective view of the structure of Fig. 1;
Fig. 3 shows a process step for forming the mounting structure according to the invention;
Fig. 4 is a graph showing a relation between a thickness of an edge seal material and sealing strength between a channel and bracket portion of the glass run;
Fig. 5 shows side view of an automotive door in which the glass run according to the invention may be utilized;
Fig. 6 is a perspective view of a conventional glass run structure;
Fig. 7 is a cross-sectional view of an attachment step carried out for the conventional structure of Fig 6;
Fig. 8 shows an attachment step for an alternative glass run structure according to the conventional art;
Fig. 9 shows another alternative conventional method of attachment utilizing projection welding technique; and
Fig. 10 shows a glass run structure of an offset type utilizing the conventional attachment technique shown in Fig. 9.

### Description of the Preferred Embodiment

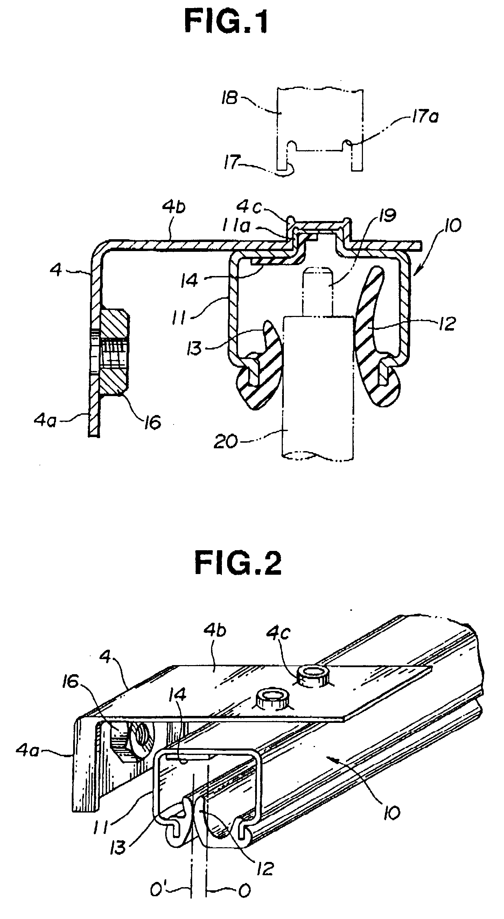

Hereinbelow, a preferred embodiment of the invention will be explained in detail with reference to Figs. 1 - 4. Where applicable, like reference numbers will be utilized to refer to parts common to the glass run structure described above in relation to the prior art. First, referring to Fig. 1, similarly to the above-described known structure, a glass run assembly 10, and mounting structure therefor, includes an inverted, substantially U or C-shaped rail member (hereinbelow: glass run channel) 11 mounting a resilient glass run comprised of first and second opposed seal lip members 12, 13 and an edge seal member 14 disposed on a bottom surface of the glass run channel 11. According to the embodiment, a larger seal lip 12 is provided on a side of the channel corresponding to the vehicle interior, while a smaller seal lip 13 is provided on the side of the vehicle exterior. The glass run assembly is to be mounted to a structural member of a vehicle, for example, via a substantially L-shaped mounting bracket 4. The mounting bracket 4 may include a first wing 4a including a weld nut 16 attached thereto over an opening defined in the first wing 4a such that the bracket 4 may be attached by means of a bolt or the like. Alternatively, other means of attachment may also be used for attaching the bracket 4.

As may be seen in Figs. 1 - 3, the present embodiment is an offset type glass run assembly, as described above. According to the present embodiment, a seal axis 0' at which the first and second seal lip contact each other, is offset from the median axis 0 of the channel by a preselected distance toward the side of the vehicle exterior.

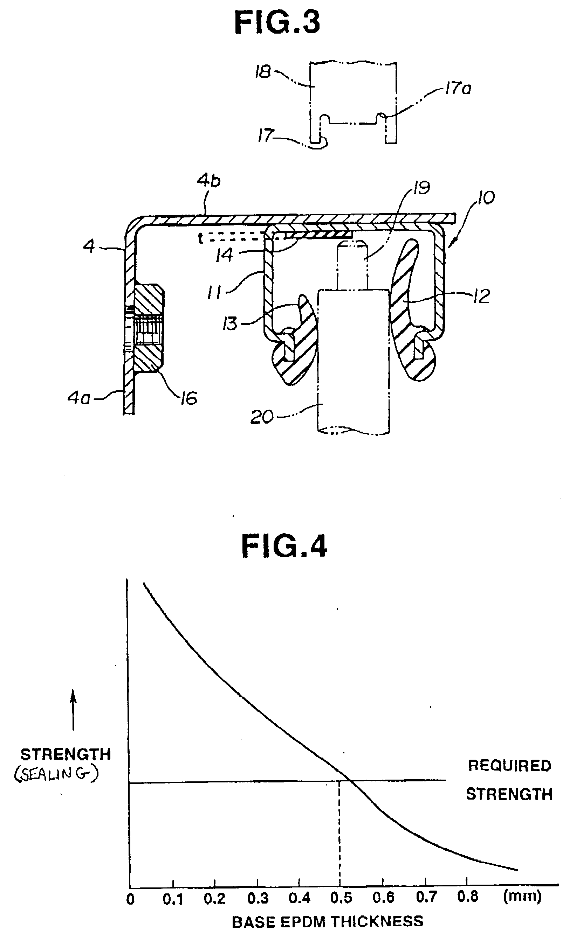

However, according to the invention, to assure effective joining of the channel 11 to the bracket 4, punch processing is utilized for forming plastically deformed portions 11a and 4c. Referring to Fig. 3, it may be seen that the assembled glass run assembly 10 including all members (viz, 12, 13, 14) of the glass run adhered thereto is positioned such that an outer surface of a closed side of the channel 11 is adjacent a second wing 4b of the bracket 4 at a desired mounting position. Then, a die portion 18 having a forming recess 17 defined therein is positioned on an outer surface of the second wing 4b of the bracket at the mounting position, while a punching member 20 of a punching apparatus (not shown) is inserted through the open side of the channel 11 and positioned against the bottom inner surface of the channel 11 to oppose the die portion 18 at the mounting position. The punching member 20 includes a forming end 19 which has a peripheral shape corresponding to that of the forming recess 17 of the die portion 18. When the forming end 19 of the punching member 20 and the forming recess 17 of the die 18 are suitably aligned, the punching apparatus is operated for forming the plastically deformed portions 11a, 4c in a single operation. Further, according to forming the plastically deformed portions 11a, 4c together by punching, it may always be assured that the respective recesses 11a, and 4c are positionally aligned and precisely configured so as to fittingly interlock (press-fit) with each other. Thus, according to the invention, accurate and reliable attachment may be effected without need of welding or other processing.

According to the embodiment, the punch and die portions 20 and 17 are circular in configuration, although other shapes are possible. Further, for expediting consistent and uniform punch processing and secure attachment between the members, an annular groove 17a may be provided at a bottom of the forming recess 17, around a peripheral edge thereof.

Further according to the present embodiment, the seal members 12, 13, and 14 are formed of ethylenepropylene diene terpolymer (EDPM) or other flexible material having suitable resilience. However, alternatively only the edge seal member 14 may be formed of such material. As will be noted from the drawings, since the glass run assembly 10 is preassembled, the edge seal member 14 becomes interposed between the forming end 19 of the punching member 20 and the bottom inner wall of the channel 11 at the joining position. As best seen in Fig. 1, the material selected for the edge seal member 14 is of sufficient elasticity to allow plastic deformation of the edge seal member 14 by punch processing, without tearing or rupturing of the material of which the seal member 14 is formed.

However, for assuring that damage to the edge seal member 14 does not occur a thickness of the EPDM layer must be chosen accordingly. Referring to Fig. 4, a graph is presented showing an obtained sealing performance in relation to a thickness of the edge seal member 14, formed of EPDM resin. Further, a solid horizontal line in Fig. 4 indicates a necessary minimum sealing strength.

As may be appreciated, sufficient sealing is achieved when a thickness t of the edge seal member 14 is 0.5 mm or less. Also, the present inventors have found that, when the thickness t is 0.1 mm or greater sufficient sealing performance and durability of the edge seal member 14 may be obtained. Thus, according to the present embodiment, a seal thickness t is established between a range of equal to or greater than 0.1 mm and equal to or less than 0.5 mm.

Thus, according to the present invention as described herein above, a mounting structure for a glass run assembly is provided in which effective joining of a glass run channel 11 to a mounting bracket 4 therefor may be reliably assured without complicated assembly or damage to an edge seal portion of a resilient glass run portion thereof. In addition, the glass run assembly and mounting structure therefor according to the invention is compact in size and simple in structure and manufacture installation may be effected using conventional tools and techniques.

Further, the glass run and mounting structure of the invention provides reliable sealing performance and structural durability for all types of glass run configurations including offset type glass run constructions.

## Claims

1. A mounting structure for a glass run assembly (10), comprising:
a mounting bracket (4) including a first wing (4a) and a second wing (4b) joined to each other,
a glass run (11) of a substantially C-shaped glass run channel structure,
the glass run (11) being attached to the second wing (4b) of the mounting bracket (4),
the glass run (11) having opposed edges that are on the opposite sides of and spaced distant from a first hypothetical longitudinal plane containing the median axis (O) of the C shape to define an open side of the C-shaped glass run channel structure;
first and second opposed seal lip members (12,13) attached to the said opposed edges, respectively, and disposed on the opposite sides of and along a second hypothetical longitudinal plane containing a sealing axis (O'); and
an edge seal member (14) attached to the glass run (11) and disposed along the second hypothetical plane, the edge seal member (14) being placed upon and fixed to a bottom surface of the glass run (11);
characterised in that:
the second hypothetical plane is parallel to and offset from the first hypothetical plane by a predetermined distance; and
the glass run (11) and the second wing (4b) of the mounting bracket (4) have plastically deformed portions (11a and 4c) fixedly secured to each other, with press-fit, by punch processing, and offset with respect to the second hypothetical plane (O') towards the first hypothetical plane (O).

2. A mounting structure as claimed in claim 1, wherein the edge seal member (14) has a thickness in the range from 0.1 mm to 0.5 mm.

3. A mounting structure as claimed in claim 1 or 2, wherein at least the edge seal member (14) is a rubber or resin member having high resilience.

4. A mounting structure as claimed in any preceding claim, wherein the glass run (11) and the mounting bracket (4) are made of metal.

## Patentansprüche

1. Befestigungsstruktur für eine Glasführungsbaugruppe (10), die folgende Komponenten aufweist:
eine Befestigungsschelle (4), die einen ersten Flügel (4a) und einen zweiten Flügel (4b) einschließt, die miteinander verbunden sind,
eine Glasführung (11) mit einer im wesentlichen C-förmigen Glasführungshohlkehlen-Struktur,
wobei die Glasführung (11) am zweiten Flügel (4b) der Befestigungsschelle (4) angebracht ist,
wobei die Glasführung (11) gegenüberliegende Kanten hat, die sich auf den gegenüberliegenden Seiten von und im Abstand zu einer ersten hypothetischen Längsebene befinden, welche die Mittelachse (0) der C-Form enthalt, um eine offene Seite der C-förmigen Glasführungshohlkehlen-Struktur zu bilden;
erste und zweite gegenüberliegende Dichtungslippenelemente (12, 13), die jeweils an den gegenüberliegenden Kanten angebracht sind und die sich auf den gegenüberliegenden Seiten von und längs einer zweiten hypothetischen Längsebene befinden, die eine Dichtungsachse (0') enthält; und
ein Kantendichtungselement (14), das an der Glasführung (11) angebracht und längs der zweiten hypothetischen Ebene angeordnet ist, wobei das Kantendichtungselement (14) auf eine Bodenfläche der Glasführung (11) aufgebracht und an dieser befestigt wird;
dadurch gekennzeichnet, daß:
die zweite hypothetische Ebene parallel zu der ersten hypothetischen Ebene verläuft und um einen festgelegten Abstand gegenüber dieser versetzt ist; und
die Glasführung (11) und der zweite Flügel (4b) der Befestigungsschelle (4) plastisch verformte Abschnitte (11a und 4c) haben, die sicher aneinander befestigt sind, mit Preßpassung, durch Stanzbearbeitung, und die im Verhältnis zur zweiten hypothetischen Ebene (0') hin zu der ersten hypothetischen Ebene (0) versetzt sind.

2. Befestigungsstruktur nach Anspruch 1, bei der das Kantendichtungselement (14) eine Stärke im Bereich von 0,1 mm bis 0,5 mm hat.

3. Befestigungsstruktur nach Anspruch 1 oder 2, bei der wenigstens das Kantendichtungselement (14) eine Element aus Gummi oder Kunstharz ist, das eine hohe Elastizität hat.

4. Befestigungsstruktur nach einem der vorhergehenden Ansprüche, bei der die Glasführung (11) und die Befestigungsschelle (4) aus Metall hergestellt werden.

## Revendications

1. Structure de montage pour un ensemble (10) à guide-vitre, comprenant:
une console de montage (4) comportant une première aile (4a) et une seconde aile (4b) assemblées l'une à l'autre,
un guide-vitre (11) d'une structure de canal de guide-vitre sensiblement en forme de C,
le guide-vitre (11) étant fixé à la seconde aile (4b) de la console de montage (4),
le guide-vitre (11) ayant des bords opposés qui sont sur les côtés opposés d'un premier plan longitudinal hypothétique et à une certaine distance de celui-ci, lequel plan longitudinal contient l'axe médian (0) de la forme en C pour définir un côté ouvert de la structure de canal de guide-vitre en forme de C;
des premier et second éléments formant lèvres d'étanchéité opposées (12, 13) fixés respectivement auxdits bords opposés, et disposés sur les côtés opposés et le long d'un second plan longitudinal hypothétique contenant un axe d'étanchéité (0'); et
un élément formant joint d'étanchéité de bord (14) fixé au guide-vitre (11) et disposé le long du second plan hypothétique, l'élément formant joint d'étanchéité de bord (14) étant placé sur la surface de fond du guide-vitre (11) et fixé à celle-ci,
caractérisée en ce que:
le second plan hypothétique est parallèle au premier plan hypothétique et décalé par rapport à celui-ci d'une distance prédéterminée; et
le guide-vitre (11) et la seconde aile (4b) de la console de montage (4) possèdent des portions déformées plastiquement (11a et 4c) fixées de façon fixe l'une à l'autre, avec un ajustement par pression, grâce à un traitement de poinçonnage, et décalées par rapport au second plan hypothétique (0') en direction du premier plan hypothétique (0).

2. Structure de montage selon la revendication 1, dans laquelle l'élément formant joint d'étanchéité de bord (14) a une épaisseur dans la plage entre 0,1 mm et 0,5 mm.

3. Structure de montage selon la revendication 1 ou 2, dans laquelle l'élément formant joint d'étanchéité de bord (14) au moins est un élément en caoutchouc ou en résine ayant une élasticité élevée.

4. Structure de montage selon l'une quelconque des revendications précédentes, dans laquelle le guide-vitre (11) et la console de montage (4) sont en métal.
